# EUROPEAN PATENT APPLICATION

(11) **EP 4 414 752 A1**
(43) Date of publication of application: **14.08.2024**
(21) Application number: 22878669.5
(22) Date of filing: 04.07.2022
(51) Int. Cl.: G01T 1/29, G03B 42/02, G06T 3/40

(54) **NEUTRON-SHIELDING CODED APERTURE, AND DUAL-PARTICLE IMAGE FUSION DEVICE USING SAME**

(30) Priority: 07.10.2021 KR 20210133377
(71) Applicant: Jeju National University Industry-Academic Cooperation Foundation, Jeju-do 63243 (KR)
(72) Inventor: JEONG, Manhee, Jeju-si, Jeju-do 63243 (KR)
(74) Representative: dompatent von Kreisler Selting Werner - Partnerschaft von Patent- und Rechtsanwälten mbB
(86) International application number: PCT/KR2022/009577
(87) International publication number: WO 2023/058846

(57) **Abstract**

The present invention provides a neutron-shielding coded aperture having a boron polyethylene (PE) mask, which is attached to the front end of a tungsten mask pattern of a coded aperture and has the same pattern. In order to alleviate a neutron-shielding problem, a material, in which high-density polyethylene (HDPE) having excellent neutron-shielding ability is mixed with boron, is attached to the front end of a conventional coded aperture so as to block both gamma rays and neutrons.

## Description

### Technical Field

The present invention relates to a neutron-shielding coded aperture and a dual-particle image fusion device using the same, more specifically to a neutron-shielding coded aperture and a dual-particle image fusion device using the same that are capable of allowing the real-time site image of radioactive sources to be fused with the reaction images of gamma rays and neutrons to acquire information of position, dose per second, and spectrum of radiation, thereby obtaining nuclide identification and numerical information of dose.

### Background Art

A special nuclear material means plutonium-239, uranium-233, or uranium-235 contained in uranium enriched to 20 percent or more, and in this case, the materials generally emit neutrons and gamma rays. The materials are used beneficially for electricity production, but they become dangerous materials when used in making weapons.

While special nuclear materials are being kept and carried, they have to be used for peaceful purposes, and therefore, it is necessary to carefully monitor them. As equipment for easy monitoring, an imaging device is needed so that the positions of radioactive sources are checkable.

Most of the special nuclear materials are hard to shield radioactive rays, that is, neutrons and gamma rays emitted therefrom. As existing imaging devices, generally, there are a Compton camera type imaging device or an imaging device using a coded aperture for normally recognizing the sources of gamma rays and an imaging device for modifying signal variations according to time to perform imaging for the positions of radioactive sources. In the case of neutrons, further, an imaging device using a neutron scatter camera or a coded mask having a low atomic number has been developed.

Up to now, an imaging device, which is capable of simultaneously distinguishing two particles, that is, neutrons and sources of gamma rays to analyze the positions and nuclides of the respective sources, is suggested generally with a method using neutron scatter, but the imaging device is bulky in size, thereby making it difficult to use the device, while being carried in a worker's body.

In the case of an existing coded aperture-based dual-particle image fusion device, tungsten is used as a mosaicked pattern shielding material. However, tungsten has good gamma ray shielding performance, but since neutrons scatter when meet tungsten, the time for acquiring an image becomes extend.

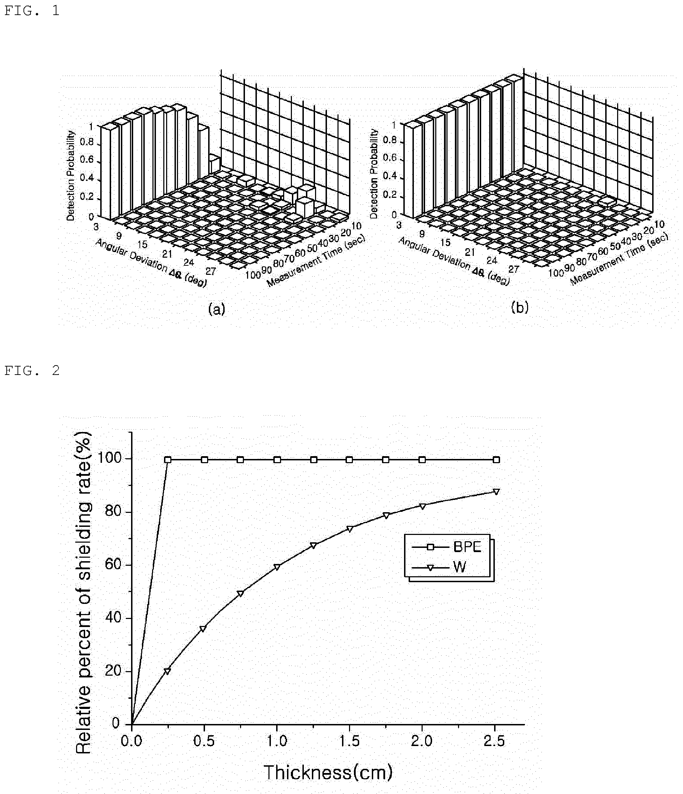

FIG. 1a shows a graph obtained by analyzing the time required for acquiring images through an existing coded aperture, while having a distance of 100 cm from ²⁵²Cf sources of 2.8 x 10⁵ n/s, and FIG. 1b shows a graph obtained by analyzing the time required for acquiring images with ¹³⁷Cs sources of 19.94uCi.

In the case of gamma rays, as shown in FIG. 1, images of the gamma rays are stably acquired after 10 seconds, and in the case of neutrons, contrarily, images of the neutrons are stably acquired after four minutes. As a result, it is checked that neutron-shielding performance is not better than gamma rays-shielding performance, and it is further appreciated that if the neutron shielding is improved, the time required for acquiring images is shortened to thus enhance the performance of the imaging device.

Therefore, there is a definite need to develop a new device capable of effectively shielding neutrons, while still having a function of shielding gamma rays.

### Disclosure of the Invention

### Technical Problems

Accordingly, the present invention has been made in view of the above-mentioned problems occurring in the related art, and it is an object of the present invention to provide a neutron-shielding coded aperture that is capable of allowing a material, in which high-density polyethylene (HDPE) having excellent neutron-shielding performance is mixed with boron, to be attached to the front end of an existing coded aperture, thereby solving a neutron-shielding problem.

It is another object of the present invention to provide a dual-particle image fusion device that is capable of allowing boron polyethylene (Boron PE) shielding materials to be attached to the outside of tungsten for shielding the top, underside, left, and right sides of an optical sensor array and to the rear surface thereof to shield background radiation.

### Technical Solutions

To accomplish the above-mentioned objects, according to one aspect of the present invention, there is provided a neutron-shielding coded aperture having a boron polyethylene (Boron PE) mask attached to the front end of a tungsten mask pattern thereof, the boron polyethylene mask having the same pattern as the tungsten mask pattern.

To accomplish the above-mentioned objects, according to another aspect of the present invention, there is provided a coded aperture-based dual-particle image fusion device including: an optical camera for imaging the site of radioactive sources to acquire a site image; the neutron-shielding coded aperture according to claim 1 for allowing the radiation emitted from the radioactive sources to be incident thereonto and having a coded pattern formed thereon; a scintillator array having a size of N x N pixels and adapted to produce scintillation signals for gamma rays and neutrons from the radiation incident thereonto through the neutron-shielding coded aperture; an optical sensor array having a size of N x N pixels and adapted to acquire electrical signals for the scintillation signals produced through the scintillator array; a signal processing unit for distinguishing the reaction signals for the reaction positions and sizes of the gamma rays and neutrons, based on the electrical signals; an image fusing unit for acquiring the reaction images of the gamma rays and neutrons, based on the reaction signals, and fusing the reaction images with the site image to acquire a fused image; and a display unit for outputting the fused image.

According to the present invention, boron polyethylene (Boron PE) shielding materials may be attached to tungsten shielding materials located on the top, underside, left, and right sides of the optical sensor array and the rear surface of the optical sensor array, respectively.

### Advantageous Effects of the Invention

According to the present invention, to alleviate a neutron-shielding problem, the neutron-shielding coded aperture is configured to allow the material, in which high-density polyethylene (HDPE) having excellent neutron-shielding performance is mixed with boron, to be attached to the front end of the existing coded aperture, thereby shielding both gamma rays and neutrons.

According to the present invention, further, the dual-particle image fusion device is configured to allow the boron polyethylene (Boron PE) shielding materials to be attached to the outsides and rear surfaces of the tungsten shielding materials for shielding the four sides of the coded aperture and the optical sensor array, thereby improve the overall neutron-shielding efficiency thereof as well as shielding background radiation thereof.

### Brief Description of Drawings

FIG. 1 shows graphs obtained by analyzing time required for acquiring images with two sources through existing coded apertures.
FIG. 2 is a graph showing the analysis of thermal neutron-shielding performance between tungsten and boron polyethylene (Boron PE).
FIG. 3 is a schematic block diagram showing a coded aperture-based dual-particle image fusion device according to an embodiment of the present invention.
FIG. 4a is a perspective view showing the existing coded aperture of an imaging device, and FIG. 4b is a perspective view showing a neutron-shielding coded aperture according to the present invention.
FIG. 5a is a perspective view showing a tungsten shielding material for shielding top, underside, left, and right sides of the existing optical sensor array 120, and FIG. 5b is a perspective view showing a state where a boron polyethylene (Boron PE) shielding material is attached to the rear surface of the tungsten shielding material to shield background radiation.
FIG. 6 is a perspective view showing a dual-particle image fusion device having boron polyethylene (Boron PE) shielding materials attached to the front surface of the coded aperture, to the top, underside, left, and right sides of the optical sensor array, and to the rear surface of the optical sensor array, respectively.

### Mode for Invention

Hereinafter, embodiments of the present invention will be described in detail. If it is determined that the detailed explanation on the well-known technology related to the present invention makes the scope of the present invention not clear, the explanation will be avoided for the brevity of the description.

The terms such as 'about', 'substantially', and the like used in the specification refer to given values close to unique manufacturing and material allowable errors as suggested, and to allow the present invention to be understood easily, they are used to prevent the disclosure in which accurate or absolute numerical values are mentioned from being unfairly used by an unconscientious infringer.

Now, embodiments of the present invention will be suggested to allow the present invention to be understood well. However, the embodiments may be carried out in different forms and should not be construed as limited to embodiments as will be set forth herein.

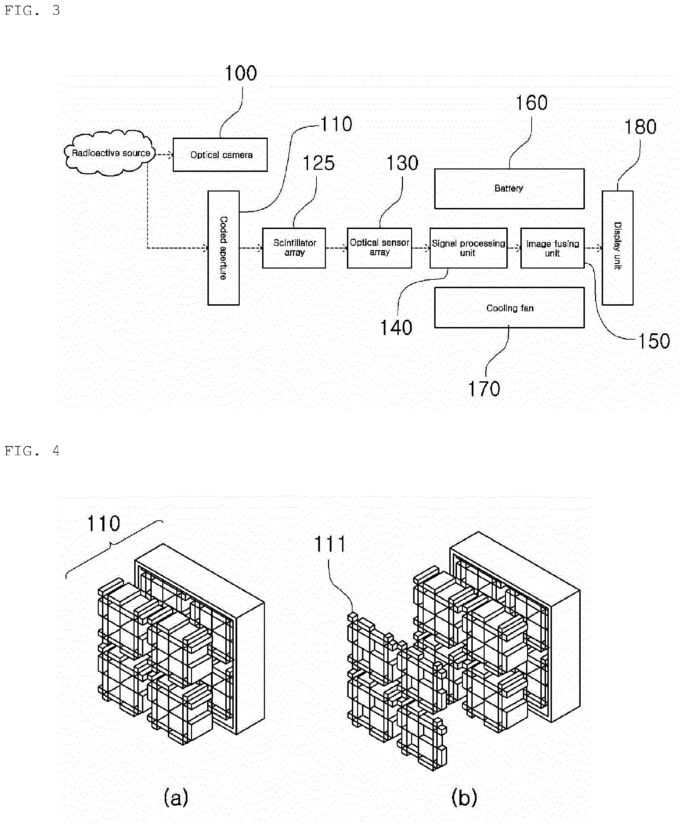

FIG. 4a is a perspective view showing the existing coded aperture of an imaging device, and FIG. 4b is a perspective view showing a neutron-shielding coded aperture according to the present invention.

The present invention relates to a neutron-shielding coded aperture having a boron polyethylene (Boron PE) mask attached to the front end of a tungsten mask pattern thereof, the boron polyethylene mask having the same pattern as the tungsten mask pattern.

FIG. 2 is a graph showing the analysis of thermal neutron-shielding performance between tungsten and boron polyethylene (Boron PE). As appreciated from the graph, tungsten is not adequate in shielding neutrons, and boron polyethylene (Boron PE) has high neutron-shielding performance even if it has a low thickness.

A coded aperture 110 of a coded aperture imaging device has a mosaicked pattern made of tungsten, and the mask pattern consists of small rectangular columns. A mask 111, which is made of boron polyethylene (Boron PE) and consists of rectangular columns, is attached to the front ends of the small rectangular columns, thereby shielding both gamma rays and neutrons. The shielding material made of boron polyethylene (Boron PE) has a length of about 1 to 8 mm, so that it may be applicable in design, while not interfering with the shape or size of the existing imaging device.

FIG. 3 is a schematic block diagram showing a coded aperture-based dual-particle image fusion device according to an embodiment of the present invention. The coded aperture-based dual-particle image fusion device according to the embodiment of the present invention largely includes an optical camera 100, the coded aperture 110, a scintillator array 125, an optical sensor array 130, a signal processing unit 140, an image fusing unit 150, and a display unit 180. According to an additional embodiment of the present invention, further, the coded aperture-based dual-particle image fusion device includes a battery 160, a cooling fan 170, and a GPS (not shown) for providing real-time position information of radioactive sources.

First, the optical camera 100 is a CCD or CMOS image sensor that serves to image the site of radioactive sources and acquire a site image. The optical camera 100 takes an image to be fused with images of gamma rays and neutrons that are obtained by processing the reaction positions of radioactive materials as images through operation program software of the image fusing unit 150 as will be discussed later. In this case, the optical camera 100 is adjusted to enable imaging to be performed even in low illumination.

The coded aperture 110 allows the radiation emitted from the radioactive sources to be incident thereonto and has a coded pattern formed thereon.

The coded aperture 110 is a mechanical focus unit that blocks high energy radiation from entering in an undesired direction and made of tungsten. The coded aperture 110 is made to the form of a coded mask pattern so that it reacts to the scintillator array 125 as will be discussed later, and in this case, a modified uniformly redundant array (MURA) is used as the coded mask pattern.

The mask pattern of the coded aperture 110 is any one of a mosaicked pattern, a centered mosaicked pattern, and an antisymmetric MURA pattern, and such a structure advantageously reconstructs a radiation real-time incidence image at one time, without having any additional process (e.g., rotation).

A structure of the mask pattern is made to allow pairs of pattern regions arranged in diagonal regions with respect to a centered portion thereof to be arranged symmetrically with each other. With respect to two imaginary diagonal lines passing through a central region of the mask pattern, in detail, the patterns of the respective regions arranged on the imaginary diagonal lines in the central region are arranged symmetrically with each other.

Such arrangements with the symmetrical patterns enable image information to be accurately extracted, without performing imaging two or more times, and allow the same image to be obtained, without any rotation of the mask pattern, thereby advantageously increasing (removing noise) a signal to noise ratio.

The scintillator array 125 has a size of N x N pixels and serves to produce scintillation signals for the gamma rays and neutrons from the radiation incident thereonto through the coded aperture 110.

In detail, the scintillator array 125 includes a scintillator body 120 reacting to the gamma rays and neutrons passing through the coded aperture 110 to produce the scintillation signals as fine light and having one or more pixel arrangements and a shielding material 121 made of tungsten and having the shape of a square loop for shielding the top, underside, left, and right sides of the scintillator body 120.

In this case, energy regions of reaction energy spectrums to the neutrons and the gamma rays are different from each other. Accordingly, as the pixel type scintillator body 120, a liquid scintillator to which pulse shape discrimination (PSD) is applied, a plastic scintillator, a stilbene (1.2-diphenylethylene, C14H12) scintillator, a CLYC (Cs2LiYC16: Ce) scintillator, or an organic glass scintillator may be applied.

In this case, if an organic stilbene scintillator is used as the scintillator body 120, heterogenous images from which the neutrons and the gamma rays are separated are acquired advantageously.

The optical sensor array 130 has a size of N x N pixels and serves to acquire electrical signals for the scintillation signals produced through the scintillator array 125.

In detail, the optical sensor array 130 serves to convert the scintillation signals converted into light through the scintillator array 125 into fine electrical signals according to amounts of light, and in this case, as the optical sensor array 130, a semiconductor optical sensor arrangement corresponding to a silicon photomultiplier (SiPM) or a pixel type position sensitive photomultiplier tube (PSPMT) may be adopted. In the case of the SiPM, the optical sensors have one-to-one coupling to small scintillators each having a sectional area of several millimeters (mm²), thereby optimizing light receiving performance for the light emitted from the scintillator array 125. Further, the optical sensor array 130 is accommodated into the shielding material 121 of the scintillator array 125, so that the top, underside, left, and right sides of the optical sensor array 130 are shielded from the radiation, like the scintillator body 120.

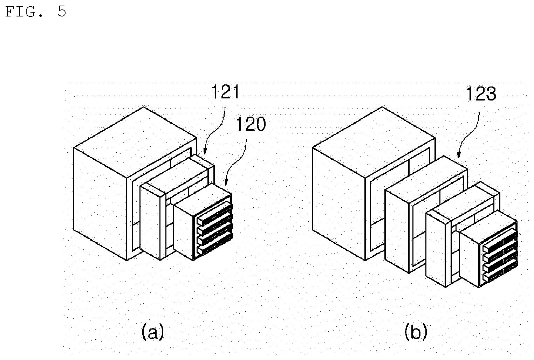

FIG. 5a is a perspective view showing a tungsten shielding material for shielding the top, underside, left, and right sides of the existing optical sensor array 120, and FIG. 5b is a perspective view showing a state where a boron polyethylene (Boron PE) shielding material is attached to the rear surface of the tungsten shielding material to shield background radiation. FIG. 5b is a perspective view showing a state where the boron polyethylene (Boron PE) shielding material 121 is attached to the outside of the tungsten shielding material for shielding the top, underside, left, and right sides of the optical sensor array, and further, a boron polyethylene (Boron PE) shielding material 133 is attached to the rear surface of the tungsten shielding material to shield background radiation.

According to the present invention, the boron polyethylene (Boron PE) shielding material 121 is attached to the outside of the tungsten shielding material for shielding the top, underside, left, and right sides of the optical sensor array, and further, a boron polyethylene (Boron PE) shielding material 133 is attached to the rear surface of the tungsten shielding material to shield background radiation.

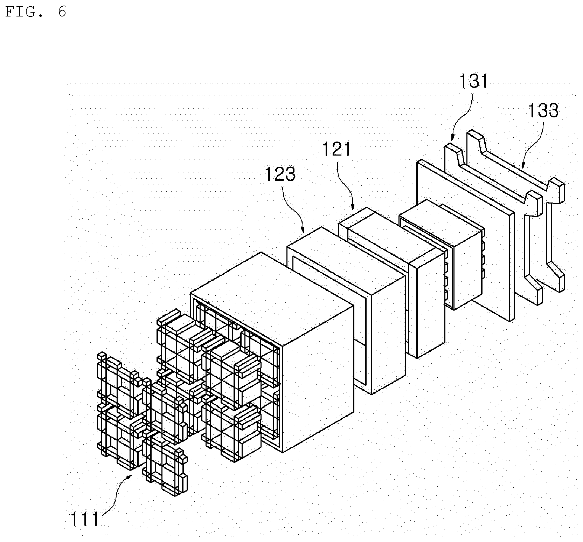

FIG. 6 is a perspective view showing the dual-particle image fusion device having the boron polyethylene (Boron PE) shielding materials attached to the top, underside, left, and right sides of the optical sensor array and to the rear surface of the optical sensor array, respectively.

According to the final figure showing the neutron-shielding coded aperture and the dual-particle image fusion device using the same of the present invention, the boron polyethylene shielding materials are additionally located on the front portion having the mosaicked pattern, the top, underside, left, and right sides of the optical sensor array behind the coded aperture, and the rear surface of the image fusion device, thereby enabling the neutrons to be shielded against the entire image fusion device.

The signal processing unit 140 serves to distinguish the reaction signals for the reaction positions and sizes of the gamma rays and neutrons, based on the electrical signals acquired through the optical sensor array 130. The signal processing unit 140 extracts the sizes, positions, and power spectral density (PSD) values of the signals by pixel acquired through the optical sensor array 130.

The image fusing unit 150 records the reaction images of the gamma rays and the neutrons, based on the reaction signals of the signal processing unit 140, and fuses the reaction images of the gamma rays and the neutrons with the site image of the radioactive sources acquired through the optical camera 100 to acquire a fused image.

In this case, the image fusing unit 150 is a kind of computer in which programmed software is stored to acquire, store and analyze the images and spectrums of the gamma rays and neutrons and the information by time and radioactive dose, to operate the reaction positions of the gamma rays and neutrons, and to edit the operated results as an image.

The image fusing unit 150 reconstructs the site image in real time, and as an algorithm for reconstructing the site image, an iterative image reconstruction algorithm such as MLEM and compressed-sensing is used. A system function needed therefor is made by using simulation codes such as MCNP and GEANT4, and otherwise, a system function obtained by applying mathematical modelling is used. To reconstruct the image in real time, in this case, at least iteration process and reconstruction time have to be used, and further, previous information has to be reset.

Besides, a method for fusingly reconstructing the images of the gamma rays and neutrons and the site image through the image fusing unit 150 is largely divided into two methods.

One of the two methods is an integration mode in which total detection time is determined so that all signals detected during the total detection time are used, and the other is a real-time mode in which the integration mode is carried out, only while the total number of signals detected using count rate information of graphical user interface (GUI) is 3000, so that the map information of a detector at that time is used in the above-mentioned image reconstruction technique.

For example, the image of the radioactive sources is reconstructed only with 3000 detected signals using image reconstruction technique, and if the count rate for the radioactive sources is 300 counts per second (cps), events for 10 seconds are recorded. Next, the map of the detector is made to reconstruct the image. In this case, a display part showing the progress of 100% exists on the GUI, thereby making it possible to predict when the radiation image is displayed.

The display unit 180 outputs the image data processed through the image fusing unit 150, energy spectrum, count rate, and temperature values. According to the present invention, in this case, the real-time position information of the radioactive sources is acquired through GPS and then outputted to a screen through the display unit 180.

According to the present invention, further, a power source is supplied to the coded aperture-based dual-particle image fusion device through the battery 160, and in this case, a secondary battery, which is rechargeable, is used as the battery 160. According to another embodiment of the present invention, the battery 160 is connected to an external power cable and directly receives the power source.

According to the present invention, further, the cooling fan 170 is provided to emit the heat generated during the data processing of the signal processing unit 140 and the image fusing part 150 to the outside, thereby cooling the signal processing unit 140 and the image fusing part 150.

Furthermore, a tungsten shielding material is located between the optical sensory array 130 and the signal processing unit 140 to shield background radiation emitted from the rear side of the signal processing unit 140 toward the optical sensory array 130, thereby advantageously acquiring more accurate data.

As mentioned above, under the above configuration, the dual-particle image fusion device according to the present invention visualizes nuclide identification through the information of position, dose per second, and spectrum of radiation fused with the site image, the site position information through the GPS, and the like, thereby ensuring a worker's safety and being easy to be carried in the worker's body to allow radiation distribution maps to be made according to position variations.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A neutron-shielding coded aperture having a boron polyethylene (Boron PE) mask attached to the front end of a tungsten mask pattern thereof, the boron polyethylene (Boron PE) mask having the same pattern as the tungsten mask pattern.

2. A coded aperture-based dual-particle image fusion device comprising:
an optical camera for imaging the site of radioactive sources to acquire a site image;
the neutron-shielding coded aperture according to claim 1 for allowing the radiation emitted from the radioactive sources to be incident thereonto and having a coded pattern formed thereon;
a scintillator array having a size of N x N pixels and adapted to produce scintillation signals for gamma rays and neutrons from the radiation incident thereonto through the neutron-shielding coded aperture;
an optical sensor array having a size of N x N pixels and adapted to acquire electrical signals for the scintillation signals produced through the scintillator array;
a signal processing unit for distinguishing the reaction signals for the reaction positions and sizes of the gamma rays and neutrons, based on the electrical signals;
an image fusing unit for acquiring the reaction images of the gamma rays and neutrons, based on the reaction signals, and fusing the reaction images with the site image to acquire a fused image; and
a display unit for outputting the fused image.

3. The coded aperture-based dual-particle image fusion device according to claim 2, wherein boron polyethylene (Boron PE) shielding materials are attached to tungsten shielding materials located on the top, underside, left, and right sides of the optical sensor array and the rear surface of the optical sensor array, respectively.
